# EUROPEAN PATENT APPLICATION

(11) **EP 4 501 558 A1**
(43) Date of publication of application: **05.02.2025**
(21) Application number: 23796694.0
(22) Date of filing: 19.04.2023
(51) Int. Cl.: B25J 17/02, B25J 9/02

(54) **CONNECTION STRUCTURE**

(30) Priority: 27.04.2022 KR 20220051994
(71) Applicant: Seegene, Inc., Seoul 05548 (KR)
(72) Inventor: HAN, Yoojun, Anyang-si, Gyeonggi-do 14044 (KR); CHO, Deog Pill, Seoul 08018 (KR); JEONG, Won-Seok, Seoul 08719 (KR); LIM, Hyun-Jin, Seoul 06927 (KR)
(74) Representative: Beck & Rössig European Patent Attorneys
(86) International application number: PCT/KR2023/005309
(87) International publication number: WO 2023/211047

(57) **Abstract**

An embodiment of the present invention relates to a connection structure which connects a robot arm capable of three-axis movement to a dividing module that divides a solution into a preset amount, the connection structure comprising: a first member provided with a robot arm connection portion connected to the robot arm and a first axis connection portion protruding from the robot arm connection portion in a first direction; a second member provided with a dividing module connection portion which is coupled to the robot arm connection portion with a main shaft and connected to the dividing module, and a second axis connection portion protruding from the dividing module connection portion in the first direction; and a tilting member which has one end coupled to the first axis connection portion as a first axis and the other end coupled to the second axis connecting portion as a second axis, and tilts the second member by a certain angle with respect to the first member when dividing the solution. The tilting member is tilt-moved on the basis of the first axis while pushing the second axis, and the second member is tilt-moved on the basis of the main shaft when being pushed by the tilting member.

## Description

### Technical Field

The present disclosure relates to a connection structure for connecting a dispensing module to a robot arm.

### Background Art

One type of molecular diagnostic kit product involves putting various reagents required for nucleic acid isolation and detection into tubes, which are then boxed and sold. In order to manufacture such a product, a process is required in which bulk reagents are divided into individual tubes and dispensed in small amounts using a dispensing module.

Here, the dispensing module is a device configured to accurately quantify and dispense a small amount of a solution of 1 ml or less into a tube, a well plate, or the like. When a small amount of solution is dispensed vertically into a tube using the dispensing module, liquid droplets may splatter and scatter or bubbles may be formed. Since the amount of reagent dispensed into each individual tube is quite small, the loss of liquid droplets can have a significant effect on the total remaining amount of reagent in the tube. Therefore, it is preferable to incline the tube or the pipette of the dispensing module, allowing the solution to flow along the wall of the tube.

In this case, while it is possible to tilt the pipette when automatically dispensing the solution using a robot arm capable of rotational movement, it is inefficient to use such an expensive robot arm solely to implement the tilting operation.

In addition, when dispensing is performed using an orthogonal robot arm with limited movement along the X, Y, and Z axes, it is not possible to tilt the pipette, and thus a separate operation is required to precisely adjust the pipette or tilt the tube during solution dispensing. However, in this case, the operation speed slows down, making it unsuitable for application in a product production process.

### Prior Art Documents

### Patent Documents

U.S. Patent No. 6,998,055 (Feb. 14, 2006)

### Disclosure of Invention

### Technical Problem

Against this background, the present disclosure provides a connection structure configured to implement a tilting function of a dispensing module while connecting the dispensing module to an orthogonal robot arm.

### Solution to Problem

To achieve these and other advantages and in accordance with the purpose of the present disclosure, there is provided a connection structure for connecting a robot arm capable of three-axis movement and a dispensing module for dispensing a solution in a predetermined amount, the connection structure including: a first member including a robot arm connection part connected to the robot arm and a first shaft connection part protruding from the robot arm connection part in a first direction; a second member coupled to the robot arm connection part by a main shaft, the second member including a dispensing module connection part connected to the dispensing module and a second shaft connection part protruding from the dispensing module connection part in the first direction; and a tilting member having one end coupled to the first shaft connection part by a first shaft and the other end coupled to the second shaft connection part by a second shaft, the tilting member configured to tilt the second member by a predetermined angle with respect to the first member during solution dispensing, wherein the tilting member is configured to move at an angle about the first shaft while pushing the second shaft, and the second member is configured to be pushed by the tilting member to move at an angle about the main shaft.

In an embodiment of the present disclosure, the tilting member may be a connection structure including: a cover coupled to the first shaft connection part by the first shaft such that an upper portion of the tilting member is spaced apart from a lower portion of the first shaft connection part by a predetermined distance; a housing coupled to the cover and having a hollow inner space formed therein; and a piston configured to separate the inner space into an upper space and a lower space and moves in the direction of the lower space or the upper space based on air pressure injected into the upper space or the lower space, wherein when air pressure is applied to the upper space, the piston is configured to move in the direction of the lower space to push the second shaft so as to tilt the second member with respect to the first member, and when air pressure is applied to the lower space, the piston is configured to move in the direction of the upper space to pull the second shaft to restore the second member with respect to the first member.

In an embodiment of the present disclosure, the piston may be a connection structure including: a piston body configured to separate the inner space of the housing into the upper space and the lower space; and a piston rod having one end coupled to the piston body and the other end extending outside the housing to be coupled to the second shaft connection part by the second shaft.

In an embodiment of the present disclosure, the connection structure may further include at least one tilt angle adjustment member disposed to pass through the first shaft connection part and may include an upper protruding portion protruding upward from the first shaft connection part and a lower protruding portion protruding downward from the first shaft connection part, wherein the lower protruding portion is configured to contact a top surface of the cover to restrict a tilting angle of the tilting member and the second member when the tilting member operates.

In an embodiment of the present disclosure, the tilt angle adjustment member may further include an adjustment element configured to adjust a protrusion length of the lower protruding portion as the adjustment element engages with the upper protruding portion.

In an embodiment of the present disclosure, an angle at which the second member is tilted with respect to the first member may be greater than 0° and less than or equal to 10°.

In an embodiment of the present disclosure, the first member may have an insertion groove through which the robot arm is inserted and coupled.

In an embodiment of the present disclosure, an end portion of the lower protruding portion may have a rounded shape.

In an embodiment of the present disclosure, the cover may include a seating portion having a groove or hole shape, which contacts the end portion of the lower protruding portion during the operation of the tilting member.

### Advantageous Effects of Invention

According to an aspect of the present disclosure, the connection structure of the present disclosure may implement a tilting operation of the dispensing module with a simple structure while using an orthogonal robot arm capable of moving along the X, Y, and Z axes.

In addition, the connection structure enables high-speed control of the tilting operation of the dispensing module by implementing a tilting operation by employing a piston structure that reciprocates between two predetermined points.

Furthermore, the connection structure has a function that allows fine adjustment of the tilting angle of the dispensing module, so that the dispensing module may be tilted at various angles depending on the situation.

It should be understood that the effects of the present disclosure are not limited to those described above, and include all effects that can be inferred from the configuration of the invention as described in the detailed description or the claims of the present disclosure.

### Brief Description of the Drawings

FIG. 1 is a perspective view illustrating a state in which a dispensing module is connected to a robot arm by using a connection structure according to an embodiment of the present disclosure.
FIG. 2 is an exploded view illustrating a state in which the connection structure, the robot arm, and the dispensing module according to an embodiment of the present disclosure are disassembled.
FIG. 3 is a perspective view of a connection structure according to an embodiment of the present disclosure, as viewed from one direction.
FIG. 4 is a perspective view of a connection structure according to an embodiment of the present disclosure, as viewed from another direction.
FIG. 5 is an exploded view of a connection structure according to an embodiment of the present disclosure.
FIG. 6 is an exploded view of a tilting member according to an embodiment of the present disclosure.
FIG. 7 is a partially enlarged view of FIG. 4 according to an embodiment of the present disclosure.
FIGS. 8(a) and (b) are views illustrating the operation of the tilting member before and after activation, respectively, according to the embodiment of the present disclosure.

### Detailed Description of the Invention

Hereinafter, the present disclosure will be described in detail with reference to an embodiment and exemplary drawings. These embodiments are provided only for more specifically describing the present disclosure, and it will be apparent to those skilled in the art that the scope of the present disclosure is not limited by these embodiments according to the gist of the present disclosure.

In addition, in assigning reference numerals to components in each drawing, it should be noted that the same components are denoted by the same reference numerals as possible, even if they are illustrated in different drawings. Moreover, in describing the present disclosure, when it is determined that a detailed description of a related known configuration or function may obscure the gist of the present disclosure, the detailed description thereof will be omitted.

In addition, in describing the components of the present disclosure, terms such as first, second, A, B, (a), (b), (i), (ii), and the like may be used. Such terms are only for distinguishing the components from other components, and are not intended to limit the essence, sequence, or order of the respective components. When a component is described as being "connected", "coupled", or "linked" to another component, it can be understood that the component may be directly connected or linked to the other component, however, it can also be understood that another component may be "connected", "coupled", or "linked" between each of the components.

Hereinafter, embodiments of the present disclosure will be described in detail with reference to the accompanying drawings.

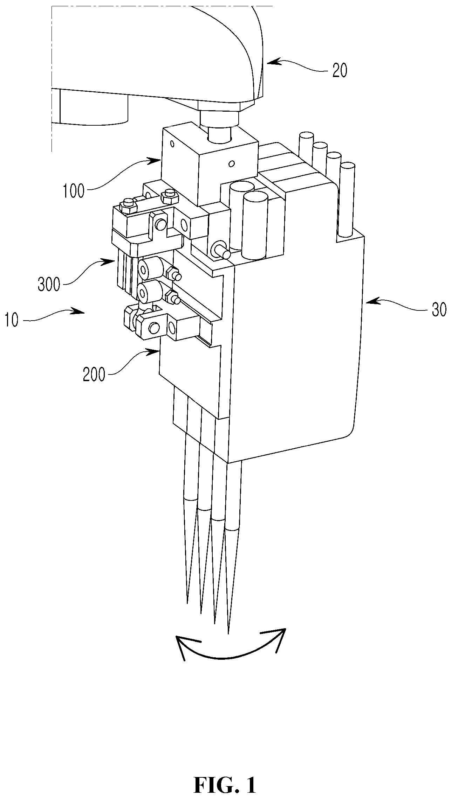

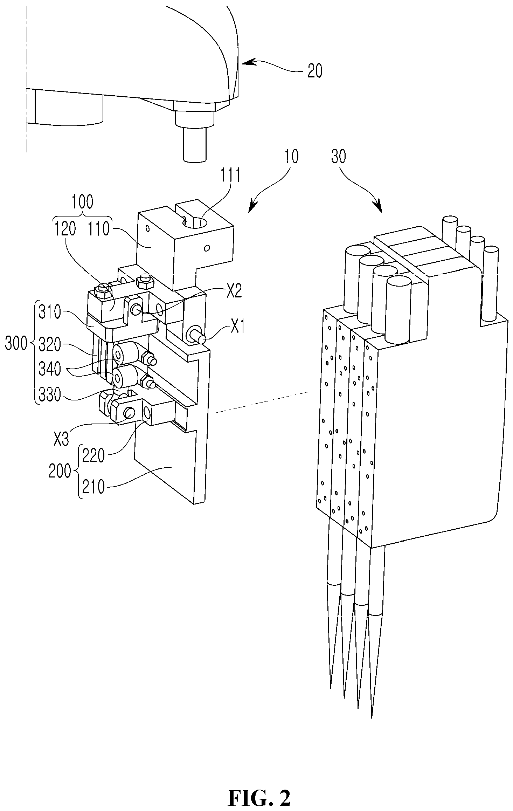

FIG. 1 is a perspective view illustrating a state in which a dispensing module is connected to a robot arm by using a connection structure according to an embodiment of the present disclosure, and FIG. 2 is an exploded view illustrating a state in which the connection structure, the robot arm, and the dispensing module according to an embodiment of the present disclosure are disassembled.

As shown in FIGS. 1 and 2, the present disclosure relates to a connection structure 10 for connecting a dispensing module 30 to a robot arm 20. More specifically, the present invention may be a connection structure 10 configured to connect the dispensing module 30 to the robot arm 20 and implement a tilting function of the dispensing module 30 with a simple structure.

Here, the robot arm 20 may be an orthogonal robot arm capable of three-axis movement along the X, Y, and Z axes. In addition, the dispensing module 30 may be a device configured to accurately quantify a small amount of a solution of 1 ml or less and dispense the quantified solution to a tube, a well plate, or the like. At this time, a plurality of pipettes for the aspiration or dispensing of a solution such as a liquid reagent, a sample, or the like may be mounted on the dispensing module 30, and the dispensing module 30 may be configured to aspirate or dispense the solution to the plurality of tubes simultaneously or sequentially using the plurality of pipettes.

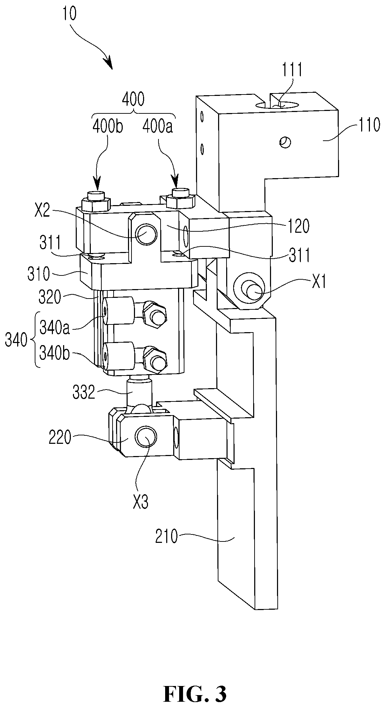

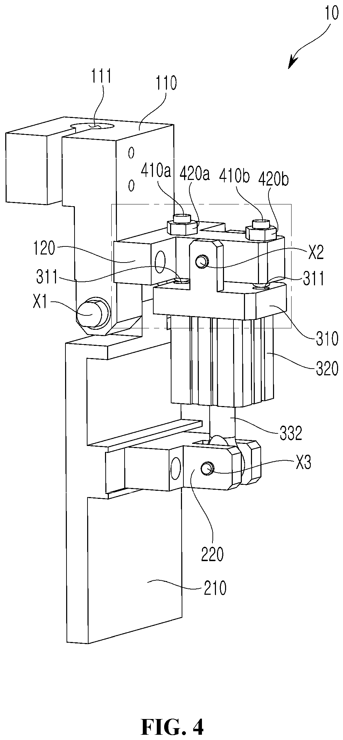

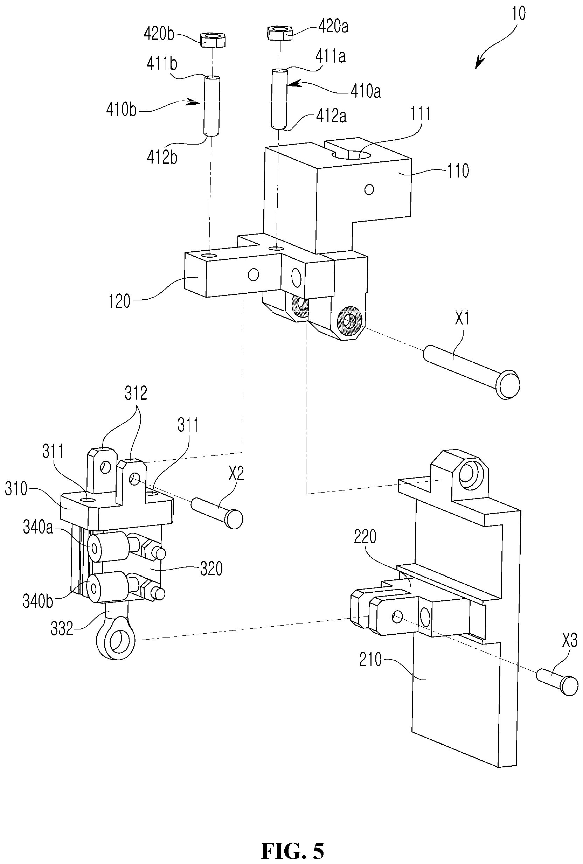

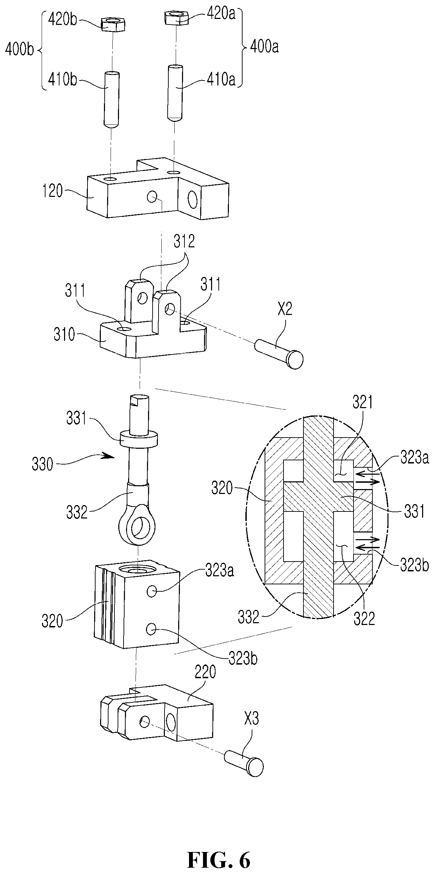

FIG. 3 is a perspective view of a connection structure according to an embodiment of the present disclosure, as viewed from one direction, FIG. 4 is a perspective view of the connection structure according to an embodiment of the present disclosure, as viewed from another direction, FIG. 5 is an exploded view of the connection structure according to an embodiment of the present disclosure, and FIG. 6 is an exploded view of a tilting member according to an embodiment of the present disclosure.

Referring to FIGS. 1 to 6, a connection structure 10 of the present disclosure includes a first member 100, a second member 200, and a tilting member 300.

A robot arm 20 is connected to the first member 100. In addition, the first member 100 is axially coupled to each of the second member 200 and the tilting member 300. The dispensing module 30 may be detachably connected to the second member 200.

More specifically, the first member 100 is configured to include a robot arm connection part 110 axially coupled to the second member 200, and a first shaft connection part 120 axially coupled to the tilting member 300. At this time, the robot arm connection part 110 and the first shaft connection part 120 may be integrally formed, or may be formed in a manner where separate components are coupled together.

An insertion groove 111 through which an insertion protrusion of the robot arm 20 is inserted and coupled may be formed at an upper portion of the robot arm connection part 110. The robot arm connection part 110 may be coupled to the second member 200 in a downward direction by the main shaft X1.

The first shaft connection part 120 may protrude from the robot arm connection part 110 in a first direction, and may be coupled to the tilting member 300 in the downward direction by the first shaft X2. The first direction may be a direction perpendicular to the main shaft X1. In order to tilt the second member 200 with respect to the first member 100 about the main shaft X1, the first shaft connection part 120 and the second shaft connection part 220 axially coupled to the tilting member 300 may protrude in a direction perpendicular to the main shaft X1. In addition, in order to avoid interference with the dispensing module 30 coupled to the dispensing module connection part 210 of the second member 200, the first shaft connection part 120 and the second shaft connection part 220 may protrude in a direction opposite to the direction in which the dispensing module 30 is coupled to the dispensing module connection part 210.

The dispensing module 30 is detachably connected to the second member 200. In addition, the second member 200 is axially coupled to each of the first member 100 and the tilting member 300.

More specifically, the second member 200 includes a dispensing module connection part 210 axially coupled to the first member 100, and a second shaft connection part 220 axially coupled to the tilting member 300. At this time, the dispensing module connection part 210 and the second shaft connection part 220 may be integrally formed, or may be formed in a manner where separate components are coupled together.

The dispensing module connection part 210 may be formed in a substantially plate shape so as to be coupled to the dispensing module 30 in a surface-to-surface manner. At this time, various coupling methods such as screw coupling, adhesion, and the like may be applied to the coupling between the dispensing module connection part 210 and the dispensing module 30. The dispensing module connection part 210 may be coupled to the first member 100 in an upward direction by the main shaft X1.

The second shaft connection part 220 may protrude from the dispensing module connection part 210 in the first direction, and may be coupled to the tilting member 300 in the upward direction by the first shaft X2. The first direction in which the second shaft connection part 220 protrudes, is the same direction in which the first shaft connection part 120 protrudes from the robot arm connection part 110. In other words, the first shaft connection part 120 and the second shaft connection part 220 protrude in the same direction and are coupled to the tilting member 300.

The tilting member 300 is axially coupled to each of the first member 100 and the second member 200. At this time, the tilting member 300 is configured to tilt the second member 200 by a predetermined angle with respect to the first member 100 during solution dispensing. That is, the tilting member 300 functions to tilt the dispensing module 30 connected to the second member 200 during the solution dispensing so that the solution in the pipette flows along the inner wall of the tube. Here, the tilting operation may be a slant movement, which refers to an operation that involves a slight degree of inclination.

The upper end of the tilting member 300 is coupled to the first shaft connection part 120 by the first shaft X2, and the lower end of the tilting member 300 is coupled to the second shaft connection part 220 by the second shaft X3. That is, the tilting member 300 may be positioned between the first shaft connection part 120 and the second shaft connection part 220. The tilting member 300 extends in the downward direction during the operation, and accordingly, is moved at an angle about the first shaft X2 while pushing the second shaft X3. Further, the second member 200 is pushed by the tilting member 300 to be moved at an angle about the main shaft X1.

The main shaft X1, the first shaft X2, and the second shaft X3 may be disposed parallel to each other. As described above, since the first member 100, the second member 200, and the tilting member 300 are connected to each other through the main shaft X1, the first shaft X2, and the second shaft X3 that are parallel to each other, it is possible for the second member 200 and the tilting member 300 to move at an angle with respect to the fixed first member 100 during the operation of the tilting member 300.

Meanwhile, referring to FIGS. 5 and 6, the tilting member 300 includes a cover 310, a housing 320, a piston 330, and an air injection port 340.

The cover 310 may be coupled to the first shaft connection part 120 by the first shaft X2 through a pair of extended portions 312 such that a top surface of the cover 310 is spaced apart from a lower portion of the first shaft connection part 120 by a predetermined distance.

The housing 320 may be coupled to the cover 310 at a lower side of the cover 310, and may have a hollow inner space. In addition, communication holes 323a and 323b may be formed in the housing 320 so that air may be introduced into the inner space or air may be discharged from the inner space.

Meanwhile, the piston 330 may be provided in the inner space of the housing 320.

The piston 330 separates the inner space of the housing 320 into an upper space 321 and a lower space 322, and one end of the piston 330 is connected to the second member 200, more specifically, the second shaft connection part 220 through the second shaft X3. At this time, the piston 330 moves upward or downward due to the pressure of the air, that is, air pressure injected into the upper space 321 or the lower space 322.

The upper injection port 340a is connected to the upper communication hole 323a to apply air pressure to the upper space 321 of the housing 320, and the lower injection port 340b is connected to the lower communication hole 323b to apply air pressure to the lower space 322 of the housing 320.

In other words, when air pressure is applied to the upper space 321, the piston 330 pushes the second shaft X3 while moving downward, that is, in the direction of the lower space, thereby tilting the second member 200 with respect to the first member 100. In addition, when air pressure is applied to the lower space 322, the piston 330 moves upward, that is, in the direction of the upper space, and pulls the second shaft X3 to restore the second member 200 with respect to the first member 100.

Meanwhile, the piston 330 includes a piston body 331 and a piston rod 332.

The piston body 331 separates the inner space of the housing 320 into the upper space 321 and the lower space 322, and moves upward or downward by the air pressure applied to the inner space. At this time, the piston body 331 may be formed in a shape corresponding to a cross-sectional shape of the inner space of the housing 320.

The piston rod 332 may have one end coupled to the piston body 331 and the other end extending outside the housing 320 to be coupled to the second shaft connection part 220 by the second shaft X3. That is, depending on the movement of the piston body 331 due to the air pressure, the piston rod 332 tilts the second member 200 while pushing the second shaft X3 or pulling the second shaft X3.

As described above, in the present disclosure, the pneumatic cylinder structure is applied to the tilting member 300 to move the second shaft X3, but the present disclosure is not limited thereto, and other cylinder structures that can move the second shaft X3, aside from air pressure, may also be applied.

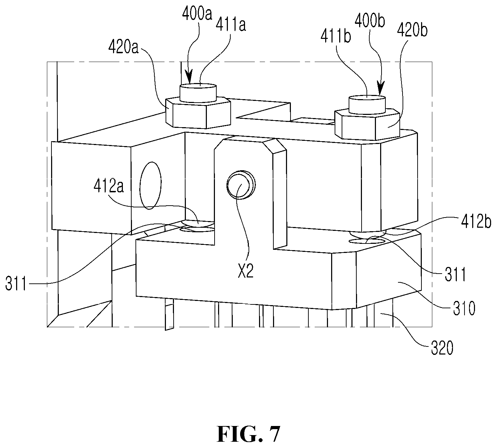

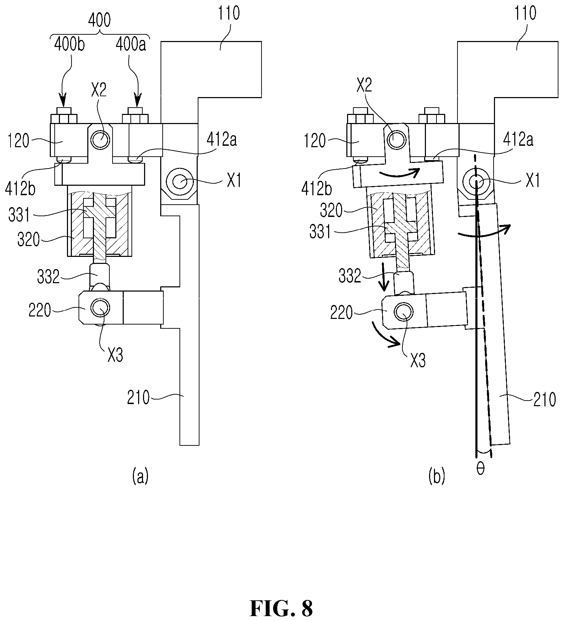

FIG. 7 is a partially enlarged view of FIG. 4 according to an embodiment of the present disclosure, and FIGS. 8(a) and (b) of are views illustrating the operation of the tilting member before and after activation, respectively, according to an embodiment of the present disclosure.

Referring to FIGS. 6 to 8, the connection structure 10 of the present disclosure may further include one or more tilt angle adjustment members 400. The tilt angle adjustment member 400 is disposed to vertically pass through the first shaft connection part 120 of the first member 100, and is configured to restrict the tilting angle of the second member 200 with respect to the first member 100 during the operation of the tilting member 300.

At this time, the tilt angle adjustment member 400 includes a first tilt angle adjustment member 400a that restricts the tilting angle when the piston rod 332 tilts the second member 200 while pushing the second shaft X3. In addition, the tilt angle adjustment member 400 includes a second tilt angle adjustment member 400b that restricts the restoring angle when the piston rod 332 pulls the second shaft X3 to restore the second member 200.

The first tilt angle adjustment member 400a may be disposed at a proximal side from the robot arm connection part 110, and the second tilt angle adjustment member 400b may be disposed at a distal side from the robot arm connection part 110.

Meanwhile, the first tilt angle adjustment member 400a may include a first pass-through element 410a having a rod shape and vertically passing through the first shaft connection part 120 and coupled to the first shaft connection part 120. When the first pass-through element 410a is coupled to the first shaft connection part 120, an upper protruding portion 411a protruding upward from the first shaft connection part 120 and a lower protruding portion 412a protruding downward from the first shaft connection part 120 may be formed.

Here, when the piston rod 332 tilts the second member 200 while pushing the second shaft X3, the lower protruding portion 412a comes into contact with the top surface of the cover 310 to restrict the tilting angle of the tilting member 300 and the second member 200 with respect to the first member 100.

In addition, the first tilt angle adjustment member 400a may include a first adjustment element 420a that adjusts a protrusion length of the lower protruding portion 412a as the first adjustment element 420a is engaged with the upper protruding portion 411a. That is, if the protrusion length of the lower protruding portion 412a increases according to the degree of adjustment of the first adjustment element 420a, the moving range in which the cover 310 contacts the lower protruding portion 412a decreases, and thus the tilting angle decreases. On the other hand, if the protrusion length of the lower protruding portion 412a is reduced according to the degree of adjustment of the first adjustment element 420a, the moving range in which the cover 310 is brought into contact with the lower protruding portion 412a is increased, thereby increasing the tilting angle.

As described above, as the first pass-through element 410a and the first adjustment element 420a of the first tilt angle adjustment member 400a are provided, the tilting angle of the second member 200 with respect to the first member 100 is controlled, which enables the tilting member 300 and the second member 200 to move at an angle. At this time, according to an embodiment, the angle at which the second member 200 is tilted with respect to the first member 100 may be set to be greater than 0° and less than or equal to 20°, and preferably, greater than 0° and less than or equal to 10°.

Meanwhile, the second tilt angle adjustment member 400b may include a second pass-through element 410b having a rod shape and vertically passing through the first shaft connection part 120 and coupled to the first shaft connection part 120. When the second pass-through element 410b is coupled to the first shaft connection part 120, an upper protruding portion 411b protruding upward from the first shaft connection part 120 and a lower protruding portion 412b protruding downward from the first shaft connection part 120 may be formed.

Here, when the piston rod 332 pulls the second shaft X3 to restore the second member 200, the lower protruding portion 412b comes into contact with the top surface of the cover 310 to restrict the restoring angle of the tilting member 300 and the second member 200 with respect to the first member 100.

In addition, the second tilt angle adjustment member 400b may include a second adjustment element 420b that adjusts a protrusion length of the lower protruding portion 412b as the second adjustment element 420b is engaged with the upper protruding portion 411b. That is, if the protrusion length of the lower protruding portion 412b increases according to the degree of adjustment of the second adjustment element 420b, the moving range in which the cover 310 contacts the lower protruding portion 412b decreases, and thus, the restoring angle decreases. On the other hand, if the protrusion length of the lower protruding portion 412b is reduced according to the degree of adjustment of the second adjustment element 420b, the moving range in which the cover 310 is brought into contact with the lower protruding portion 412b is increased, thereby increasing the restoring angle.

According to an embodiment, the end portions of the lower protruding portions 412a and 412b may have a downwardly convex rounded shape. **In** addition, a top surface of the cover 310 may be provided with a seating portion 311 having a groove or hole shape at a position where the lower protruding portions 412a and 412b come into contact. Accordingly, when the tilting member 300 operates and the lower protruding portions 412a and 412b come into contact with the cover 310, it allows for an increase in the contact area to reduce the impact force.

As described above, the connection structure 10 of the present disclosure may implement the tilting operation of the dispensing module 30 with a simple structure while using the orthogonal robot arm 20 capable of moving in the X, Y, and Z axes.

In addition, the connection structure 10 enables high-speed control of the tilting operation of the dispensing module 30 by implementing a tilting operation by employing a piston structure that reciprocates between two predetermined points.

Furthermore, the connection structure 10 has a function that allows fine adjustment of the tilting angle of the dispensing module 30, so that the dispensing module 30 may be tilted at various angles depending on the situation.

The above description of the present disclosure is for illustration, and those of ordinary skill in the art to which the present disclosure pertains will understand that the present disclosure can be easily modified into other specific forms without changing the technical spirit or essential features of the present disclosure. Therefore, it should be understood that the embodiments described above are exemplary and not restrictive in all aspects. For example, each component described in a single form may be implemented separately, and likewise, components described as separate may be implemented in a combined form.

The scope of the present disclosure is indicated by the following claims, and it should be interpreted that all changes or modifications derived from the meaning and scope of claims and the equivalent concept thereof are included in the scope of the present disclosure.

### List of reference numerals

10 : Connection structure
20 : Robot arm
30 : Dispensing module
100 : first member
110 : Robot arm connection part
111 : Insert groove
120 : 1st shaft connection
200 : second member
210 : Dispensing module connection part
220 : 2nd axis connection
300 : Tilting member
310 : cover
311 : Seating part
312 : Extension part
320 : housing
321 : upper space
322 : lower space
323a: Upper communication hole
323b: Lower communication hole
330 : Piston
331 : Piston body
332 : Piston rod
340 : Air inlet
340a: upper inlet
340b: lower inlet
400 : No tilting angle adjustment member
400a: First tilting angle adjustment member
400b: Second tilting angle adjustment member
410a: first penetrating element
411a: upper protrusion
412a: lower protrusion
410b: second penetrating element
411b: upper protrusion
412b: lower protrusion
420a: first adjustment element
420b: second adjustment element
X1: Main axis (connection axis between robot arm connection and dispensing module connection)
X2: 1st axis (connection axis between the 1st axis connection part and the tilting member)
X3: 2nd axis (connection axis between the 2nd axis connection and the tilting member)

## Claims

1. A connection structure for connecting a robot arm capable of three-axis movement and a dispensing module for dispensing a solution in a predetermined amount, the connection structure comprising:
a first member comprising a robot arm connection part connected to the robot arm and a first shaft connection part protruding from the robot arm connection part in a first direction;
a second member coupled to the robot arm connection part by a main shaft, the second member comprising a dispensing module connection part connected to the dispensing module and a second shaft connection part protruding from the dispensing module connection part in the first direction; and
a tilting member having one end coupled to the first shaft connection part by a first shaft and the other end coupled to the second shaft connection part by a second shaft, the tilting member configured to tilt the second member by a predetermined angle with respect to the first member during solution dispensing,
wherein the tilting member is configured to move at an angle about the first shaft while pushing the second shaft, and the second member is configured to be pushed by the tilting member to move at an angle about the main shaft.

2. The connection structure of claim 1, wherein the tilting member comprises:
a cover coupled to the first shaft connection part by the first shaft such that a top surface of the cover is spaced apart from a lower portion of the first shaft connection part by a predetermined distance;
a housing coupled to the cover and having a hollow inner space formed therein; and
a piston configured to separate the inner space into an upper space and a lower space and move in the direction of the lower space or the upper space based on air pressure injected into the upper space or the lower space,
wherein when air pressure is applied to the upper space, the piston is configured to move in the direction of the lower space to push the second shaft to tilt the second member with respect to the first member, and when air pressure is applied to the lower space, the piston is configured to move in the direction of the upper space to pull the second shaft to restore the second member with respect to the first member.

3. The connection structure of claim 2, wherein the piston comprises:
a piston body configured to separate the inner space of the housing into the upper space and the lower space; and
a piston rod having one end coupled to the piston body and the other end extending outside the housing to be coupled to the second shaft connection part by the second shaft.

4. The connection structure of claim 2, further comprising at least one tilt angle adjustment member disposed to pass through the first shaft connection part and comprising an upper protruding portion protruding upward from the first shaft connection part and a lower protruding portion protruding downward from the first shaft connection part,
wherein the lower protruding portion is configured to contact a top surface of the cover to restrict a tilting angle of the tilting member and the second member.

5. The connection structure of claim 4, wherein the tilt angle adjustment member further comprises an adjustment element configured to adjust a protrusion length of the lower protruding portion as the adjustment element engages with the upper protruding portion.

6. The connection structure of claim 1, wherein an angle at which the second member is tilted with respect to the first member is greater than 0° and less than or equal to 10°.

7. The connection structure of claim 1, wherein the first member has an insertion groove through which the robot arm is inserted and coupled.

8. The connection structure of claim 4, wherein an end portion of the lower protruding portion has a rounded shape.

9. The connection structure of claim 8, wherein the cover comprises a seating portion having a groove or hole shape, which contacts the end portion of the lower protruding portion during the operation of the tilting member.
